Europäisches Patentamt

European Patent Office

Office européen des brevets

(11) Veröffentlichungsnummer: **0 417 405 B1**

(12) **EUROPÄISCHE PATENTSCHRIFT**

(45) Veröffentlichungstag der Patentschrift: **06.09.95**

(21) Anmeldenummer: **90111300.1**

(22) Anmeldetag: **15.06.90**

(51) Int. Cl.⁶: **C08J 9/12**, B29B 7/94

(54) **Verfahren zum Herstellen eines Schaumstoffes aus thermoplastischem Kunststoff.**

(30) Priorität: **15.09.89 DE 3930847**

(43) Veröffentlichungstag der Anmeldung:
**20.03.91 Patentblatt 91/12**

(45) Bekanntmachung des Hinweises auf die
Patenterteilung:
**06.09.95 Patentblatt 95/36**

(84) Benannte Vertragsstaaten:
**AT CH DE DK FR GB IT LI NL SE**

(56) Entgegenhaltungen:
**EP-A- 297 293**
**US-A- 3 542 715**
**US-A- 3 839 238**
**US-A- 4 421 866**
**US-A- 4 424 287**

(73) Patentinhaber: **HERMANN BERSTORFF Maschinenbau GmbH
Hannoversche Strasse 149
D-30627 Hannover (Kleefeld) (DE)**

(72) Erfinder: **Meyke, Joachim, Dipl.-Ing.
Zur Hindenburgschleuse 6
D-3000 Hannover 71 (DE)**

**Beschreibung**

Die Erfindung betrifft ein Verfahren zum Herstellen eines Schaumstoffes aus thermoplastischem Kunststoff, einem ersten pulverförmigen bereits mit dem Kunststoffgranulat vor dem Extrusionsprozeß trocken vermischten Nukleierungsmittel und einem Treibmittel, wobei in dem Extruder der Kunststoff und das erste Nukleierungsmittel vermischt und plastifiziert werden und in das plastifizierte Gemisch ein Treibmittel durch eine stromabwärts angeordnete Einspritzöffnung eingedüst wird,
**dadurch gekennzeichnet,**
daß in dieses Gemisch gasförmiger Stickstoff als zweites Nukleierungsmittel in einer Menge von 0,1 bis 0,5 Gew.-%, bezogen auf das Gewicht des mit dem ersten Nukleierungsmittel vermischten Kunststoffes eingebracht wird und anschließend als Treibmittel ein flüssiges Ethanol ($C_2H_5OH$), Propan-2-ol ($C_3H_7OH$) oder 2-Methylpropan-2-ol ($C_4H_9OH$) oder Mischungen dieser Alkohole oder Abmischungen dieser Alkohole mit bis zu 30 % Wasser in einer Zugabemenge von 0,5 bis 5 Gew.-%, bezogen auf das Gewicht des mit dem ersten Nukleierungsmittel vermischten Kunststoffes eingebracht werden.

Die Erfindung betrifft auch eine Extruderanlage zur Durchführung des anmeldungsgemäßen Verfahrens. Die Markteinführung der extrudierten Schaumprodukte ist Mitte der 60er-Jahre durch den Gebrauch der Fluorchlorkohlenwasserstoffe (FCKW) als Ersatz für die brennbaren Treibmittel Pentan aus der Familie der Kohlenwasserstoffe entscheidend begünstigt worden. Mit Beginn des Einsatzes der FCKW-Typen R11, R12, R113 und R114 bei der Schaumextrusion, ließen sich Halbzeuge und Produkte herstellen, die den Marktansprüchen sowohl in bezug auf Qualität als auch Handhabung entsprachen.

Aufgrund wissenschaftlicher Erkenntnis wurde festgestellt, daß die FCKW-Gase, die auch in der Aerosol- und Kältetechnik als Sprüh- und Kältemittel und in der Elektronikindustrie als Reinigungsmittel sowie bei der Polyurethanverschäumung als Treibmittel eingesetzt werden, den Abbau der Ozonschicht in der oberen Erdatmosphäre wesentlich beschleunigen.

Es wurde daher in jüngster Zeit auf den Gebrauch des sehr leicht entzündlichen, ursprünglich eingesetzten Pentans zurückgegangen, das nicht ozongürtelschädigend ist.

Es sind hierfür allerdings Dosiersysteme für die Treibmittelzugabe einzusetzen, die sicherstellen, daß das Treibmittel aufgrund von Verschleiß im Druckaufbausystem der Pumpe nicht austreten kann, wodurch die Feuergefahr erheblich erhöht würde. Außerdem müssen die Treibmitteldosiersysteme getrennt von der Anlage aufgestellt werden. Weitere zusätzliche Sicherheitsmaßnahmen, die unbedingt notwendig sind, sind die intensive Belüftung in Form von Lufterneuerung am Aufstellungsplatz der Schaumextrusionsanlage, im Folien-Zwischenlager, im Tiefziehbereich und im Bereich der Reextrusion der Schaumabfälle sowie das zusätzliche Anbringen von Einrichtungen, die die statische Aufladung der Schaumhalbzeuge und der Produkte ableiten. Der Einsatz von Pentan als Treibmittel ist daher sehr problematisch.

Durch die US 3,839,239 ist es bereits bekannt geworden, zur Herstellung geschäumter Polyolefine dem in einem Extruder geschmolzenen Polyolefin nacheinander zwei unterschiedliche Treibmittel mit unterschiedlichen, den Vorgang der Verschäumung begünstigenden Eigenschaften zuzufügen, um ein geschäumtes Polyolefin mit geringem Gewicht und kleiner Zellstruktur herzustellen. insbesondere die als erstes Treibmittel zugesetzten flüssigen Treibmittel weisen jedoch die bereits beschriebenen Nachteile auf. U.a. werden dann Stickstoff und $CO_2$ als zusätzliches Treibmittel eingesetzt.

In der EP-A-0 279 293 ist ein Verfahren zum Herstellen eines mit Treibmitteln aufschäumbaren Gemisches aus an sich nur sehr schwer mischbaren Kunststoffen beschrieben. In das Kunststoffgemisch wird dann ein Treibmittel unter Druck eingedüst. Bei dem Treibmittel kann es sich unter anderem auch um Stickstoff handeln.

Um die Umweltbelastung zu verringern, ist es durch die US 4,424,287 auch bereits bekannt geworden, einem herkömmlichen umweltschädlichen Treibmittel zusätzlich, z.B. $CO_2$, zuzusetzen, so daß sich der Anteil an umweltschädlichen Treibmitteln verringert.

Für das Extrusionsschäumen von Polystyrol und Polyäthylen sind bestimmte Forderungen an die Treibmittel zu stellen. Das Treibmittel sollte in der Schmelze löslich sein, aber seine Viskosität und seinen Glaspunkt nicht zu stark verändern. Das Treibmittel muß während der Expansion eine hohe Verdampfungsgeschwindigkeit aufweisen, damit die Restgaskonzentration gering bleibt. Es darf keine Permeation auftreten, da sie ein Zusammenbrechen der Zellen vor dem Erstarren zur Folge hätte.

Es ist die Aufgabe der Erfindung, Treibmittel und Nukleierungsmittel vorzuschlagen, die gute Aufschäumeigenschaften haben und bei dessen Einsatz ein leichter Schaum mit einer sehr gleichmäßigen Zellstruktur erhalten wird.

Das Treibmittel soll eine Ozongürtelschädigung völlig ausschließen. Das Treibmittel soll zu geringen Schaumdichten, d. h. zu einem leichten Schaum führen, um im Verpackungsbereich wenig Gewicht darzustellen und um möglichst wenig des relativ teuren Kunststoffes einsetzen zu müssen.

Die Aufgabe wird durch die im kennzeichnenden Teil des Patentanspruchs stehenden Merkmale gelöst.

In überraschender und nicht zu erwartender Weise wurde gefunden, daß sofern der thermoplastische Kunststoff mit einem ersten Nukleierungsmittel, insbesondere Talkum, vermischt und plastifiziert wird und in dieses Gemisch gasförmiger Stickstoff als zweites Nukleierungsmittel in einer Menge von 0,1 bis 0,5 Gew.-%, bezogen auf das Gewicht des mit dem ersten Nukleierungsmittel vermischten Kunststoffes eingedüst wird sowie anschließend als Treibmittel ein flüssiges Ethanol ($C_2H_5OH$) Propan-2-ol ($C_3H_7OH$) oder 2-Methylkpropan-2-ol ($C_4H_9OH$) oder Mischungen dieser Alkohole oder Abmischungen dieser Alkohole mit bis zu 30 % Wasser in einer Zugabemenge von 0,5 bis 5 Gew.-%, bezogen auf das Gewicht des mit dem ersten Nukleierungsmittel vermischten Kunststoffes eingebracht werden, dieses zu äußerst geringen Raumgewichten und einer gleichmäßigen Zellstruktur des Schaumstoffes führt.

Es hat sich wider Erwarten gezeigt, daß der eingesetzte Stickstoffanteil zu einer sehr gleichmäßigen Bläschenstruktur führt, wenn der Stickstoff in die bereits plastifizierte Schmelze und nach einer kurzen Einarbeitungszeit ein Alkohol der erwähnten Gruppe in die Schmelze eingedüst wird. Ohne Stickstoff als zweites Nukleierungsmittel für die Zellsteuerung zeigte ein nur mit Alkohol aufgeschäumter Kunststoff eine sehr ungleichmäßige und sehr große Bläschenstruktur. Wenn jedoch ein gasförmiger Stickstoff in der erwähnten Menge zusätzlich in die Kunststoffschmelze eingedüst wurde, zeigten sich hochbefriedigende Ergebnisse.

An dem eigentlichen Nukleierungsmittel (in diesem Fall Talkum) lagert sich in der Kunststoffschmelze der zuerst eingedüste Stickstoff an. Wenn dann die erwähnten Alkohole, bzw. auch etwa 50 % Abmischungen davon anschließend in die Schmelze eingedüst werden, lagern sich die Alkohole weit überwiegend wiederum an die winzigen Talkum-/Stickstoffpartikel an, so daß durch diese spezielle Eingabereihenfolge der Stoffe in der Schmelze die gleichmäßige Bläschenstruktur und gleichzeitig ein hervorragendes Raumgewicht erzielt wird.

Hervorzuheben ist noch, daß der Stickstoff gut in der Schmelze verteilt vorliegen muß (was durch das Talkum stark begünstigt wird) wenn der flüssige Alkohol in die Schmelze eingedüst wird. Es muß ein Mindestabstand von 2 D zwischen beiden Eindüsungsstellen eingehalten werden.

Darüber hinaus haben die erwähnten Alkohole den Vorteil, daß beim Austritt der damit vermischten Schmelze aus der Düse auch eine relativ gute Abkühlung eintritt. So ist z. B. beim Einsatz von Ethanol (Siedepunkt 78°C) eine überraschend schnelle Erstarrung der Bläschen beim Austritt aus der Düse feststellbar.

Durch in den Tabellen wiedergegebene Versuche wurde festgestellt, daß auch Abmischungen der drei erwähnten Alkohole zu guten Schaumergebnissen führen.

Als besonders vorteilhaft zeigten sich Abmischungen von jeweils etwa 50 % eines Alkohols mit einem anderen, wobei die in den Tabellen 4, 5 und 6 gezeigten Ergebnisse zu brauchbaren Raumgewichten und zu gleichmäßigen Zellstrukturen führten. Das Abmischungsverhältnis konnte von 20 - 80 % des einen mit den anderen Alkoholen variiert werden, wobei die Ergebnisse leicht verbessert wurden.

Wenn die erwähnten Alkohole mit bis zu 30 % Wasser versetzt werden, kann auf die Größe der gebildeten Zellen Einfluß genommen werden. Bei einer 20-prozentigen Verdünnung des Alkohols werden größere Bläschen erhalten. Wenn der Alkohol mit mehr als 35 % Wasser verdünnt wurde, bildeten sich sehr große und ungleichmäßige Zellen aus.

Die Extruderanlage für die Durchführung des Verfahrens weist in vorteilhafter Weise stromabwärts zunächst eine Einspritzeinrichtung für das gasförmige zusätzliche Nukleierungsmittel und in einem Abstand von mindestens 2 D (D = Schneckendurchmesser) eine Einspritzeinrichtung für den flüssigen Alkohol auf. Dieser Abstand ist sehr vorteilhaft, um eine gute und homogene Einmischung des gasförmigen zweiten Nukleierungsmittels zu erreichen.

In die das gasförmige Nukleierungsmittel bereits enthaltende Kunststoffschmelze läßt sich zusätzlich in überraschender Weise durch das erfindungsgemäße Verfahren eine hohe Treibmittelanreicherung erreichen, so daß zusätzlich zur stark verbesserten Bläschenstruktur auch noch ein sehr leichter Schaumstoff erhalten wird.

In der Zeichnung wird ein Extruder gezeigt, der für die Versuchsdurchführung eingesetzt wurde.

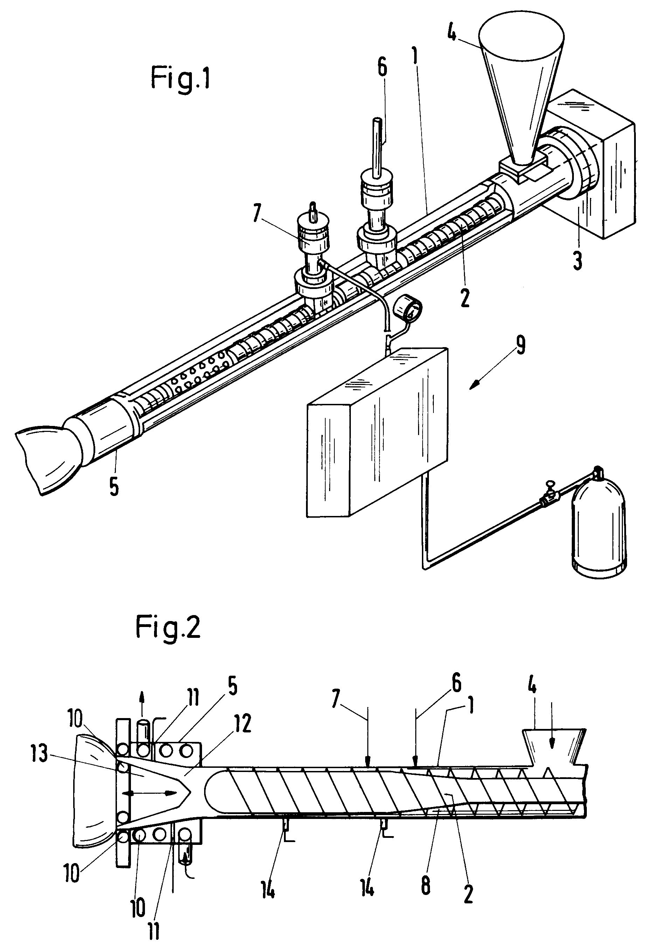

Fig. 1     zeigt eine perspektivische Darstellung des Extruders

Fig. 2     einen schematisierten Längsschnitt des Extruders

In dem Extruder 1 ist eine Schnecke 2 angeordnet, die durch ein Getriebe 3 in Drehbewegung gesetzt wird und das durch den Trichter 4 eingefüllte Material aufschmilzt, homogenisiert und in Richtung des Kopfes 5 fördert.

Durch die Einspritzdüse 6 wird als zusätzliches Nuleierungsmittel gasförmiger $N_2$ und durch die Einspritzdüse 7 flüssiger Alkohol (Ethanol) in den Extrusionsraum 8 eingedüst mit einem den Druck in Raum 8 übersteigenden Druck.

Sowohl für den Stickstoff ($N_2$) als auch für den Alkohol, werden bekannte Dosiereinrichtungen 9 eingesetzt.

In dem Kopf sind Temperierkanäle 10 angeordnet, die an nicht gezeigte Temperiergeräte angeschlossen sind.

Mittels Drucksensoren 11 wird der Druck im Raum 12 des Kopfes 5 gemessen. Auf den Druck im Raum 12 kann durch eine entsprechende Gestaltung der Fließkanäle und durch eine axiale Verstellung des Dornes 13, entsprechend des Pfeiles, eingewirkt werden.

Der Druck im Extrusionsraum 8 wird durch Drucksensoren 14 erfaßt und weitergegeben.

Bei der Durchführung der in den Tabellen beschriebenen Versuche wurde im Extrusionsraum 8 im Bereich der Einspritzdüsen 6 und 7 ein Druck zwischen 180 und 220 bar eingestellt. Am Ende der Schnecke 2 wurde der Druck auf etwa 100 bar reduziert. Im Kopf wurden im Mittel 60 - 80 bar Material-Treibmittelgemischdruck gemessen.

Die Temperatur des Gemisches betrug im Extrusionsraum 8 im Bereich der Einspritzdüsen ca. 240° C. Danach wurde die Temperatur zur Schneckenspitze hin auf 115° C eingestellt.

In den nachfolgenden Tabellen werden Beispiele aufgeführt, aus denen unterschiedliche Treibmittelgewichtsmengen sowie unterschiedliche Anteile des zusätzlichen Nukleierungsmittels und des Treibmittels dargestellt sind. Auch Versuche ohne zweites Nukleierungsmittel werden wiedergegeben, wobei deutlich wird, daß die überraschend guten Schaumergebnisse erst dann erzielt werden, wenn Stickstoff zusätzlich als Nukleierungsmittel eingesetzt wird. Es zeigte sich, daß der umweltfreundliche Alkohol nur in Verbindung mit Stickstoff als zusätzliche Porenreglersubstanz zu den hervorragenden Ergebnissen führte.

Die mit Alkohol ohne Stickstoffzugabe gemachten Versuche belegen eindeutig, daß die nur mit Alkohol gebildete Zellstruktur sehr ungleichmäßig und der gebildete Kunststoffschaum zu spröde war. Erst wenn ein gasförmiger Stickstoff als zweites Nukleierungsmittel eingesetzt wurde, zeigten sich zum einen eine sehr gleichmäßige Bläschenstruktur und zum anderen eine stark verbesserte Treibmittelanreicherung, wodurch das Raumgewicht wesentlich besser wurde.

Es werden insgesamt 26 Vergleichsbeispiele dargestellt, jeweils unter Angabe der Stickstoff- und Alkoholgewichtsprozente, des erzielten Raumgewichtes, der Schaumdicke und des jeweils eingesetzten Alkoholprozentsatzes. Die angegebenen Alkoholprozentsätze bedeuten, das der Restprozentsatz jeweils Wasser ist. Es wurde ein handelsübliches Polystyrol eingesetzt.

**Bezugszeichenliste :**

| | | |
|---|---|---|
| 1 = | Extruder |
| 2 = | Schnecke |
| 3 = | Getriebe |
| 4 = | Trichter |
| 5 = | Extruderkopf |
| 6 = | Einspritzdüse |
| 7 = | Einspritzdüse |
| 8 = | Extrusionsraum |
| 9 = | Druckaufbaueinrichtung |
| 10 = | Temperaturkanal |
| 11 = | Drucksensor |
| 12 = | Raum |
| 13 = | Dorn |
| 14 = | Drucksensor |

4

## Tabelle 1

### Tabellarische Übersicht der Beispiele

| Beispiel Nr. | Nukleierungsmittel $N_2$ Gew.-% | Treibmittel $C_2H_5OH$ Gew.-% | Raumgewicht $kg/m^3$ | Schaumdicke mm | Alkohol-Gehalt % | Bemerkungen |
|---|---|---|---|---|---|---|
| 1 | - | 1,8 | 310 | 0,8 | 85 | grobzellig, harter Schaum |
| 2 | - | 2,2 | 250 | 1,3 | 85 | grobzellig, harter Schaum |
| 3 | 0,2 | 1,0 | 170 | 1,5 | 99 | feine, gleichmäßige Zell-struktur |
| 4 | 0,2 | 2,0 | 132 | 1,9 | 99 | "          "          " |
| 5 | 0,2 | 3,0 | 90 | 2,5 | 99 | - |
| 6 | 0,2 | 1,0 | 210 | 1,0 | 85 | größere Zellen |
| 7 | 0,2 | 2,6 | 114 | 2,7 | 85 | größere Zellen |
| 8 | 0,2 | 2,2 | 180 | 20 | 99 | feinzellig |
| 9 | 0,2 | 3,0 | 120 | 30 | 99 | feinzellig |
| 10 | 0,2 | 4,0 | 100 | 40 | 99 | feinzellig |
| 11 | 0,2 | 2,0 | 140 | 25 | 85 | größere Zellen, dimensions-stabiler |
| 12 | 0,2 | 2,8 | 75 | 48 | 85 | größere Zellen, dimensions-stabiler |

## Tabelle 2

### Tabellarische Übersicht der Beispiele

| Beispiel Nr. | 2.Nukleierungsmittel $N_2$ Gew.-% | Treibmittel $C_3H_7OH$ Gew.-% | Raumgewicht $kg/m^3$ | Schaumdicke mm | Alkohol-Gehalt % | Bemerkungen |
|---|---|---|---|---|---|---|
| 13 | 0,2 | 1,0 | 165 | 1,3 | 99 | feinzellig |
| 14 | 0,2 | 3,0 | 93 | 2,4 | 99 | feinzellig |
| 15 | 0,2 | 1,0 | 160 | 1,6 | 85 | größere Zellen, dimensions-stabiler |
| 16 | 0,2 | 3,0 | 89 | 2,5 | 85 | größere Zellen, dimensions-stabiler |

## Tabelle 3

| Beispiel Nr. | 2. Nukleierungsmittel $N_2$ Gew.-% | Treibmittel $C_4H_9OH$ Gew.-% | Raumgewicht $kg/m^3$ | Schaumdicke mm | Alkohol-Gehalt % | Bemerkungen |
|---|---|---|---|---|---|---|
| 17 | 0,2 | 1,0 | 155 | 1,6 | 99 | feinzellig |
| 18 | 0,2 | 3,0 | 85 | 2,6 | 99 | feinzellig |
| 19 | 0,2 | 1,0 | 160 | 1,6 | 85 | größere Zellen, dimensions-stabiler |
| 20 | 0,2 | 3,0 | 86 | 2,6 | 85 | größere Zellen, dimensions-stabiler |

EP 0 417 405 B1

## Tabelle 4

| Beispiel Nr | 2. Nukleierungsmittel N₂ Gew.-% | Treibmittel-Gemisch $C_3H_7OH + C_2H_5OH$ (50 % : 50 %) | Raumgewicht kg/m³ | Schaumdicke mm | Alkohol-Gehalt % | Bemerkungen |
|---|---|---|---|---|---|---|
| 21 | 0,2 | 3,0 | 92 | 2,5 | 99/99 | feinzellig |
| 22 | 0,2 | 3,0 | 90 | 2,6 | 85/85 | größere Zellen |

## Tabelle 5

| Beispiel Nr | 2. Nukleierungsmittel N₂ Gew.-% | Treibmittel-Gemisch $C_2H_5OH + C_4H_9OH$ (50 % : 50 %) | Raumgewicht kg/m³ | Schaumdicke mm | Alkohol-Gehalt % | Bemerkungen |
|---|---|---|---|---|---|---|
| 23 | 0,2 | 3,0 | 88 | 2,5 | 99/99 | feinzellig |
| 24 | 0,2 | 3,0 | 91 | 2,6 | 85/85 | größere Zellen |

## Tabelle 6

| Beispiel Nr | 2. Nukleierungsmittel N₂ Gew.-% | Treibmittel-Gemisch $C_3H_7OH + C_4H_9OH$ (50 % : 50 %) | Raumgewicht kg/m³ | Schaumdicke mm | Alkohol-Gehalt % | Bemerkungen |
|---|---|---|---|---|---|---|
| 25 | 0,2 | 3,0 | 90 | 2,5 | 99/99 | feinzellig |
| 26 | 0,2 | 3,0 | 91 | 2,5 | 85/85 | größere Zellen |

## Patentansprüche

1. Verfahren zum Herstellen eines Schaumstoffes aus thermoplastischem Kunststoff, einem ersten pulverförmigen bereits mit dem Kunststoffgranulat vor dem Extrusionsprozeß trocken vermischten Nukleierungsmittel und einem Treibmittel, wobei in dem Extruder der Kunststoff und das erste Nukleierungsmittel vermischt und plastifiziert werden und in das plastifizierte Gemisch ein Treibmittel durch eine stromabwärts angeordnete Einspritzöffnung eingedüst wird,

**dadurch gekennzeichnet,**

daß in dieses Gemisch gasförmiger Stickstoff als zweites Nukleierungsmittel in einer Menge von 0,1 bis 0,5 Gew.-%, bezogen auf das Gewicht des mit dem ersten Nukleierungsmittel vermischten Kunststoffes eingebracht wird und anschließend als Treibmittel ein flüssiges Ethanol ($C_2H_5OH$), Propan-2-ol ($C_3H_7OH$) oder 2-Methylpropan-2-ol ($C_4H_9OH$) oder Mischungen dieser Alkohole oder Abmischungen dieser Alkohole mit bis zu 30 % Wasser in einer Zugabemenge von 0,5 bis 5 Gew.-%, bezogen auf das Gewicht des mit dem ersten Nukleierungsmittel vermischten Kunststoffes eingebracht werden.

2. Verfahren nach Anspruch 1
**dadurch gekennzeichnet,**
daß das erste pulverförmige Nukleierungsmittel ein Talkum ist.

3. Verfahren nach Anspruch 1,
**dadurch gekennzeichnet,**
daß als Treibmittel eine Mischung aus 20 - 80 % Ethanol ($C_2H_5OH$) und 20 - 80 % Propan-2-ol ($C_3H_7OH$) eingesetzt wird.

4. Verfahren nach Anspruch 1,
**dadurch gekennzeichnet,**
daß als Treibmittel eine Mischung aus 20 - 80 % 2-Methylpropan-2-ol ($C_4H_9OH$) und 20 - 80 % Ethanol ($C_2H_5OH$) eingesetzt wird.

5. Verfahren nach Anspruch 1,
**dadurch gekennzeichnet,**
daß als Treibmittel eine Mischung aus 20 - 80 % Propan-2-ol ($C_3H_7OH$) und 20 - 80 % 2-Methylpropan-2-ol ($C_4H_9OH$) eingesetzt wird.

6. Extruderanlage zur Durchführung des Verfahrens nach Anspruch 1, bestehend aus einem hohlzylindrischen, zwei stromabwärts hintereinander angeordnete Einspritzbereiche aufweisenden Gehäuse, in dem eine rotierende, antreibbare Homogenisierschnecke angeordnet ist,
**dadurch gekennzeichnet,**
daß der erste Einspritzbereich, mit einer Einspritzeinrichtung (6) für ein gasförmiges Nukleierungsmittel und der zweite Einspritzbereich mit einer Einspritzeinrichtung (7) für ein flüssiges Treibmittel ausgebildet ist,
und
daß zwischen beiden Bereichen ein Abstand von mindestens 2 D (D = Schneckendurchmesser) eingehalten wird.

**Claims**

1. Process for producing foam made of a thermoplastic polymer, a first powdered nucleating agent mixed with the plastics pellets in dry condition prior to the extrusion process, and a blowing agent, with the plastics material and the first nucleating agent being mixed and plasticized in the extruder and the blowing agent being injected into the plasticized compound through an injection opening that is arranged further downstream
**characterized in that**
gaseous nitrogen is added to this compound as a second blowing agent at a quantity of 0.1 to 0.5 percent by weight related to the weight of the polymer mixed with the first nucleating agent and that liquid ethanol ($C_2H_5OH$), propyl alcohol ($C_3H_7OH$) or butyl alcohol ($C_4H_9OH$), mixtures of these types of alcohol or mixtures of these alcohols with a water content of up to 30 % are incorporated as a blowing agent at a quantity of 0.5 to 5 percent by weight related to the weight of the polymer mixed with the first nucleating agent.

2. Process as per claim 1
**characterized in that**

talc in the form of powder is used as a first nucleating agent.

3. Process as per claim 1
**characterized in that**
the blowing agent applied is a mixture of 20 - 80 % ethanol ($C_2H_5OH$) and 20 - 80 % propyl alcohol ($C_3H_7OH$).

4. Process as per claim 1
**characterized in that**
the blowing agent applied is a mixture of 20 - 80 % butyl alcohol ($C_4H_9OH$) and 20 - 80 % ethanol ($C_2H_5OH$).

5. Process as per claim 1
**characterized in that**
the blowing agent applied is a mixture of 20 - 80 % propyl alcohol ($C_3H_7OH$) and 20 - 80 % butyl alcohol ($C_4H_9OH$).

6. Extrusion line for realizing the process as per claim 1, consisting of a hollow cylindrical housing with two downstream injection openings arranged one after the other and a rotating driven homogenizing screw being arranged within the housing
**characterized in that**
the first injection zone is designed with an injection device (6) for a gaseous nucleating agent and the second injection zone with an injection device (7) that is suitable for a liquid blowing agent,
and
that there is a distance of at least 2 D (D = screw diameter) between these both zones.

**Revendications**

1. Procédé pour la fabrication d'une mousse à partir des matières thermoplastiques, d'un premier agent de nucléation en forme de poudre, déjà mélangé à sec avec le granulé en matière plastique avant le processus d'extrusion, et d'un agent gonflant, la matière plastique et le premier agent de nucléation étant melangés et plastifiés dans l'extrudeuse et un agent gonflant étant injecté dans le mélange plastifié à travers une ouverture d'injection disposée en aval,
**caractérisé en ce que**
de l'azote gazeux comme deuxième agent de nucléation d'une quantité de 0,1 à 0,5 % en poids par rapport au poids de la matière plastique mélangée avec le premier agent de nucléation est introduit dans ce mélange et, qu'en tant qu'agent gonflant, de l'éthanol liquide ($C_2H_5OH$), de l'isopropanol ($C_3H_7OH$) ou de l'alcool butylique ($C_4H_9OH$) ou des mélanges ce ces alcools ou des mélanges de ces alcools ayant une teneur en eau allant jusqu'à 30 % dans une quantité supplémentaire de 0,5 à 5 % en poids par rapport au poids de la matière plastique mélangée avec le premier agent de nucléation sont introduits par la suite.

2. Procédé selon la revendication 1,
**caractérisé en ce que**
le premier agent de nucléation en forme de poudre est un talc.

3. Procédé selon la revendication 1,
**caractérisé en ce que**
un mélange de 20 à 80 % de l'éthanol ($C_2H_5OH$) et de 20 - 80 % de l'isopropanol ($C_3H_7OH$) est utilisé en tant qu'agent gonflant.

4. Procédé selon la revendication 1,
**caractérisé en ce que**
un mélange de 20 à 80 % de l'alcool butylique ($C_4H_9OH$) et de 20 à 80 % de l'éthanol ($C_2H_5OH$) est utilisé en tant qu'agent gonflant.

5. Procédé selon la revendication 1,
**caractérisé en ce que**

un mélange de 20 à 80 % de l'isopropanol ($C_3H_7OH$) et de 20 à 80 % de l'alcool butylique ($C_4H_9OH$) est utilisé en tant qu'agent gonflant.

6. Ligne d'extrusion pour la réalisation du procédé selon la revendication 1, composée d'un carter en forme de cylindre creux comprenant deux zones d'injection disposées en aval l'une après l'autre, dans lequel est disposée une vis d'homogénéisation rotative qui peut être entraînée,
**caractérisée en ce que**
la première zone d'injection est réalisée avec un dispositif d'injection (6) pour un agent de nucléation gazeux et que la deuxième zone d'injection est réalisée avec un dispositif d'injection (7) pour un agent gonflant liquide,
et
qu'entre les deux zones, une distance d'au moins de 2 D (D = diamètre de vis) est respectée.

Fig.1

Fig.2